# EUROPEAN PATENT APPLICATION

(11) **EP 4 700 185 A1**
(43) Date of publication of application: **25.02.2026**
(21) Application number: 24196103.6
(22) Date of filing: 23.08.2024
(51) Int. Cl.: E03F 1/00, F16K 3/02, F16K 3/04, F16K 3/08, F16K 11/074

(54) **FLUSH VALVE PLATE**

(71) Applicant: B/E Aerospace, Inc., Winston Salem, NC 27105 (US)
(72) Inventor: KROCZEK, Piotr Jacek, 51-317 Wroclaw (PL); SWIRNIAK, Pawel, 51-317 Wroclaw (PL); SLOMIANY, Krzysztof, 51-317 Wroclaw (PL)
(74) Representative: Dehns

(57) **Abstract**

A flush valve plate (30) having an opening (32) therethrough in a first plate portion and a solid plate area (34) in a second plate portion such that in a first position, the opening can be aligned with a port (20) of a flush valve to which the valve plate is, in use, mounted and in a second position, the solid plate area is moved into alignment with the port.

## Description

### TECHNICAL FIELD

The present disclosure is concerned with a flush valve used in a vacuum toilet.

### BACKGROUND

Vacuum toilets find use in a number of areas, including in vehicles such as aircraft, trains, ships etc. In such toilets, waste is removed from the toilet bowl by means of a vacuum that draws the waste into a waste line leading to a waste tank or other disposal location. Vacuum toilets use a flush plate valve comprising a moveable plate between the toilet bowl and the waste line, the plate being moved between a closed position where it blocks flow from the bowl to the waste line, and an open position where a flow path is provided from the bowl to the waste line, so that waste can be suctioned from the bowl into the waste line. A known flush valve has a plate that is rotated about a mounting point, by an electric motor, via a gear mechanism, from the open (flushing) position to the closed position. It is important to ensure that the valve plate is in the open or the closed position. Inaccuracies can lead to the valve not closing fully. Existing valve plates, when in the open position, leave an open groove around the waste line port and debris or contaminants can accumulate in this groove during a flush cycle. The debris can accumulate to a critical level at which the valve plate cannot move back to its closed position to seal the passage between the toilet and the waste tank.

There is a desire for an improved valve flush plate that avoids or mitigates this problem.

### SUMMARY

The present disclosure provides, in one aspect, a flush valve plate having an opening therethrough in a first plate portion and a solid plate area in a second plate portion such that in a first position, the opening can be aligned with a port of a flush valve to which the valve plate is, in use, mounted and in a second position, the solid plate area is moved into alignment with the port.

The plate may further comprisie a mounting portion having a pivot point arranged to be pivotally mounted to a housing of the flush valve, in use.

The plate may comprise an inner plate and an outer plate connected together with a space defined therebetween, each of the inner and the outer plate having a corresponding and aligned first plate portion and second plate portion

The flush valve plate may further comprise a spring element located in the space between the inner plate and the outer plate.

The spring element may be located between the second plate portion of the inner plate and the second plate portion of the outer plate.

The flush valve plate may further comprise a seal located between the inner plate and the outer plate, e.g. around the opening.

The spring element may comprise a springy material e.g. a sponge material having a spring structure. Alternatively, the spring element comprises one or more springs such as one or more conical springs or a wave spring.

In another aspect, there is provided a flush valve assembly comprising a valve housing defining a por; and a valve plate as defined above arranged to rotate in a plane, relative to the port, such as to vary a degree of coverage of the port by the valve plate depending on the rotational position of the plate.

Also provided is a vacuum toilet system comprising a toilet bowl and a waste line via which waste from the toilet bowl is ejected, and a flush valve as defined above, located between the toilet bowl and the waste line, such that the port provides fluid communication from the toilet bowl to the waste line.

### BRIEF DESCRIPTION

Examples of the flush valve and flush valve plate according to this disclosure will now be described with reference to the drawings. It should be noted that these are examples only and variations are possible within the scope of the claims.
Figure 1 shows a flush valve assembly using a conventional flush valve plate, in the open position.
Figure 2 shows the flush valve assembly of Fig, 1, in the closed position.
Figure 3 shows a different view of the flush valve of Figs. 1 and 2.
Figure 4 shows an isometric view of a flush valve plate according to one example of the disclosure.
Figure 5 is a sectional view of a flush valve having a plate as shown in Fig. 4.
Figure 6 shows an example of a spring structure used in a flush valve plate such as shown in Fig. 4.
Figure 7 shows an exploded view of an alternative example of a flush valve plate according of the disclosure.
Figure 8 shows an exploded view of another alternative example of a flush valve plate according of the disclosure.
Figure 9 shows a sectional view of a flush valve having a plate as shown in Fig. 8, in the open position.
Figures 9A and 9B are details of Fig. 9.
Figure 9C is a face on view of the flush valve shown in Fig. 9.
Figure 10 shows a sectional view of a flush valve having a plate as shown in Fig. 8, in the closed position.
Figure 10C is a face on view of the flush valve shown in Fig. 10.
Figures 11A, 11B, 11C and 11D are shown to illustrate operation of a valve plate according to the disclosure compared to a known valve plate.

### DETAILED DESCRIPTION

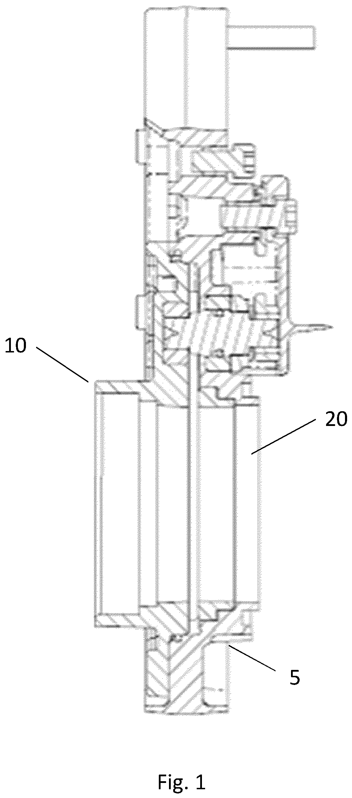

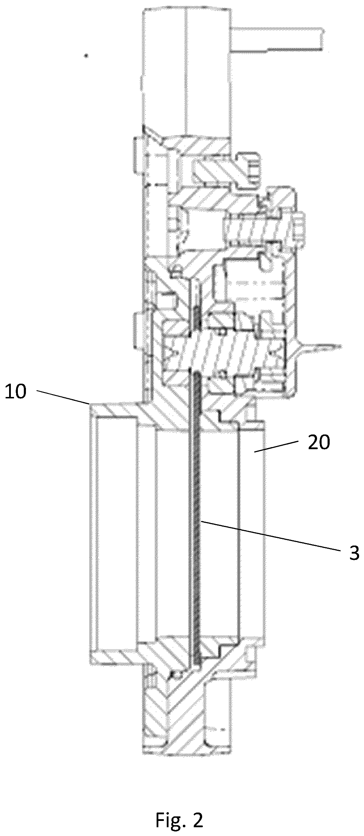

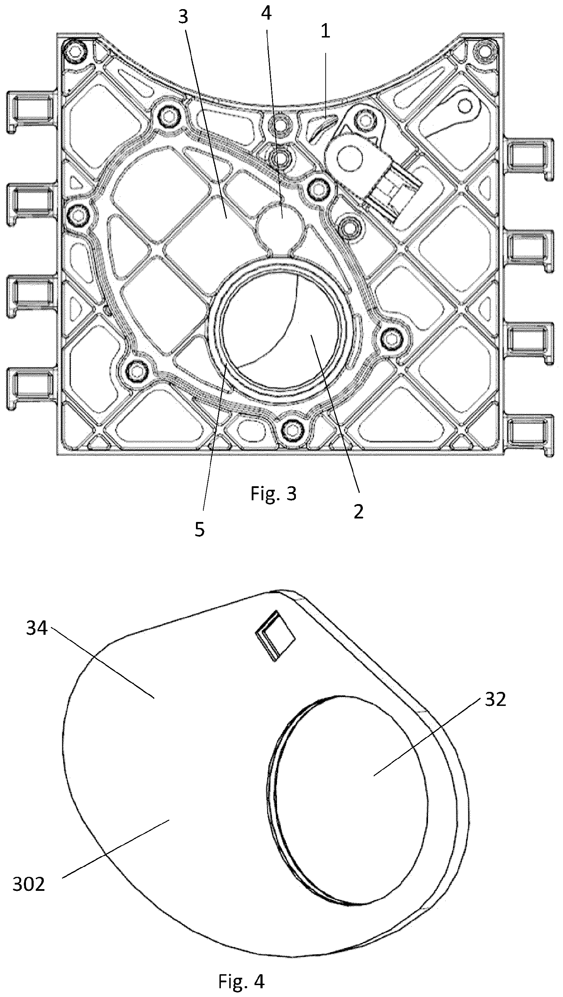

A typical flush valve arrangement will be described first with reference to Figs. 1 to 3. The valve is, in use, to be arranged between a toilet bowl 10 and a waste pipe 20. The valve has a valve housing 1 for mounting the valve in position, and a port 2 which, when the valve is mounted in position, will be located between a drain outlet of the toilet bowl and the waste or sewage line leading to a waste tank or the like. During flushing, waste is suctioned from the toilet bowl, through the port 2 into the waste line. Neither the toilet bowl nor the waste line is shown here since the use and location of such a flush valve is known to those skilled in the art. The valve also includes a movable plate 3 which is arranged to rotate or pivot about a pivot point 4, relative to the housing 1 and the port 2 between an open position in which the plate 3 does not cover the port, to allow waste to flow from the bowl to the waste line through the port during flushing, to a closed position in which the plate covers the port 2 to prevent flow of waste from the bowl to the waste line. Figure 3 shows the plate 3 in an almost fully open position. In the example shown, the port is circular and the plate has a corresponding shape such that in the closed position, it fully covers the port and in the fully open position, it does not overlap with the port. In such examples, therefore, the rounded part of the plate is ideally the same shape, but slightly larger than the port, having an attachment portion where the plate is fastened to the housing at the pivot point 4. Seals 5 are provided around the port 2 to prevent leakage between the port and the plate when the plate is closed.

Movement of the plate 3 between the open and closed positions is typically by an electric motor (not shown) which rotates a drive shaft, the drive shaft being connected via a gear mechanism to a plate shaft to which the plate 3 is attached, to rotate the plate 3. Again, this will not be described further, since such mechanisms are known to those of skill in the art and different, also know, plate driving mechanisms may also be used.

Because of the plate being shaped to move between covering the port and away from the port, when the plate is open, debris e.g. paper or other contaminants can collect in the grooves of the seal 5 around the port 2 which can prevent the plate from moving to the closed (or fully closed) position. This can result in leakage of waste matter and/or bad odours.

The flush valve plate according to this disclosure is designed to avoid the accumulation of debris in such a groove to ensure that the valve plate can properly close and so avoid such leakages.

The valve plate is formed as a plate 30 having an opening 32 therethrough in a first plate portion and a solid plate area 34 in a second plate portion such that in a first position, the opening can be aligned with a port of a flush valve to which the valve plate is, in use, mounted and in a second position, the solid plate area is moved into alignment with the port. The opening may be sized and shaped to substantially match the size and shape of the port.

The plate may be, similar to the known plate of Fig. 3, configured to be pivotally mounted between the drain out and the waste line of a toilet at a pivot point 40. The plate may be mounted to a housing 100 similar to the housing 1 of the known assembly,

Thus, in contrast to the known plate which, in the open position, is moved away from the port, the plate of the present disclosure includes an opening that is aligned with the port in the open position. This arrangement avoids the need for a seal 5 around the port and, therefore, the problem of the seal groove collecting debris when the plate is moved away from the port.

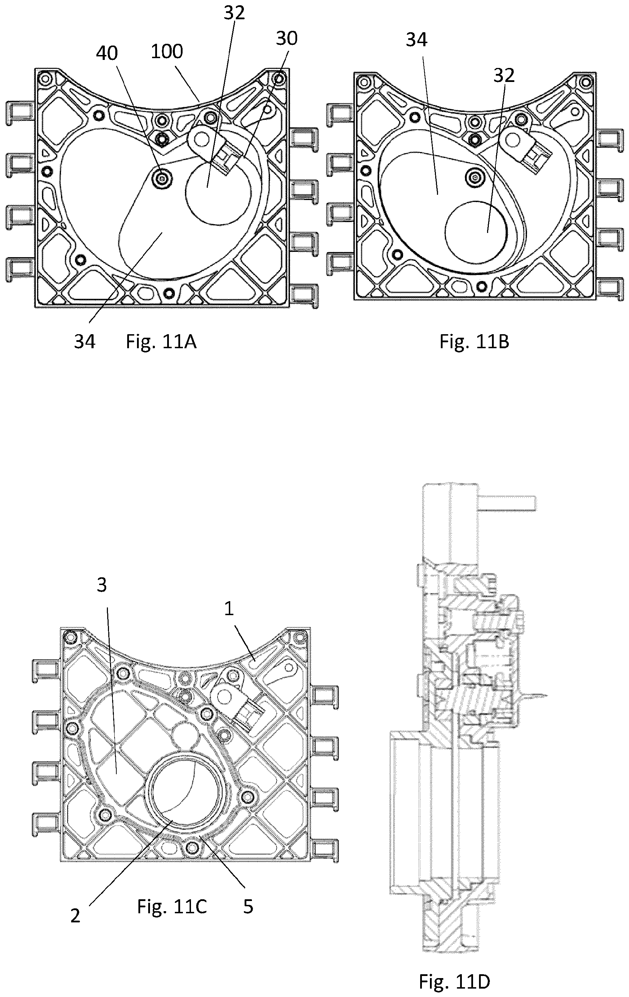

This difference is illustrated by Figs. 11A to 11D. Fig. 11A shows a flush valve plate according to this disclosure in a closed position and Fig. 11B shows the plate in the open position. The complete plate 30 therefore never moves completely away from the port and so retains a sealing assembly around the port at all positions.

This is in contrast with the know arrangement shown in a partly opening position in Fig. 11C and from a side-sectional view in Fig. 11D. When open, the plate 3 is completely away from the port. The seal that is required between the plate and the port is around the port and so, when the plate is open, the seal groove may collect debris.

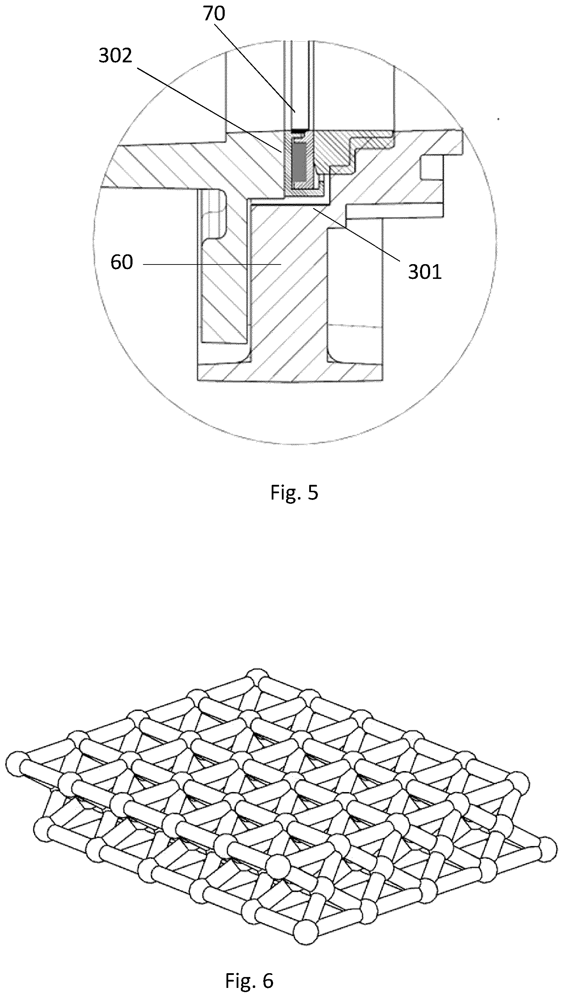

In a modification of the valve plate of this disclosure, the sealing effect can be improved by means of a spring element 60, 60', 60" located between an inner plate 301 and an outer plate 302 that combine to form the plate 30. The seal element may be implemented in various ways, some examples of which will be described below, but in all examples, will function to provide an expansive force between the inner and outer plates 301, 302 of the plate 30 causing relative expansion of the plate - i.e. causing the inner and outer plates to move away from each other (arrow E in Fig. 5) to provide a more effective seal between the plate and the drain line and the plate and the port, in use. The spring element is located between the plates' solid plate areas in the second plate portion. An additional seal 70 may be provided between the inner and outer plates in the first plate portion around the opening 32 to protect against contaminants getting between the inner and outer plates.

The spring element 60, 60', 60" provides an outwardly acting force against the inner and outer plates so that the plate can seal the toilet system even if the vacuum within the waste tank cannot be maintained, thus preventing leakages of matter or odours.

One example of such a plate is shown in Fig. 4 to 6. In this example, the spring element 60 is in the form of an expansive material such as a sponge material, positioned between the inner and outer plates 301, 302. The material, e.g. sponge material, may be formed to have a spring structure such as shown in Fig. 6. The spring material 60 can fill the whole space (i.e. the width in the direction from the inner to the outer plate) between the inner and outer plates.

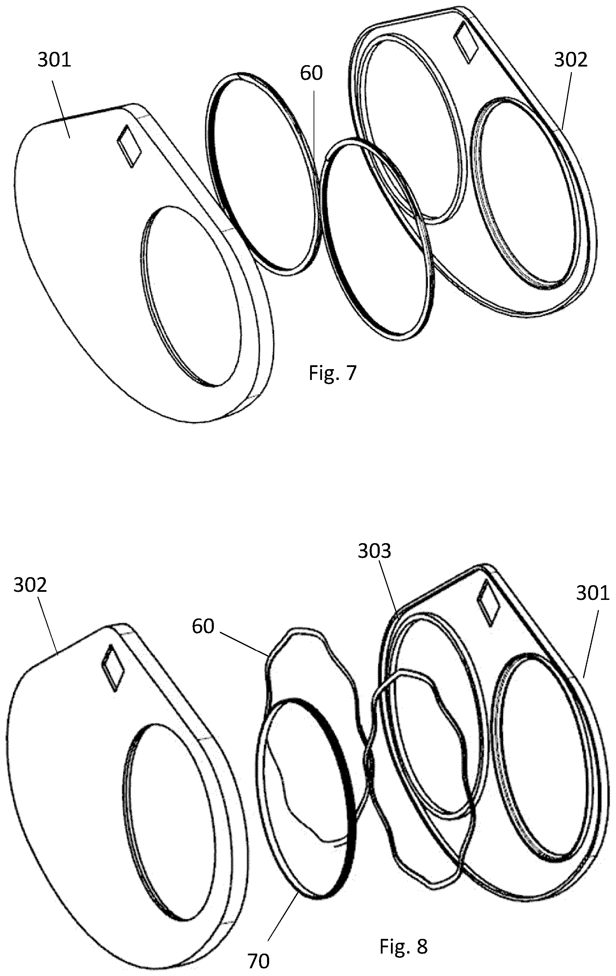

In an alternative example, such as shown in Figs. 7 and 8, the spring element may be in the form of one or more springs 60', 60" positioned between the inner and outer plates to exert an expansive spring force on eth plates.

The Example shown in Fig. 7 has two conical springs 60' located in the region of the first and second portions of the plate. In the example of Fig. 8, a single wave spring 60" forms the spring element between the inner and outer plates.

The inner and outer plates may be connected to each other by snap fit features 303.

In this example, the inner and outer plates and the spring element can each be manufactured separately and assembled. Alternatively, they can be formed as a single part using 3D printing/additive manufacturing technology.

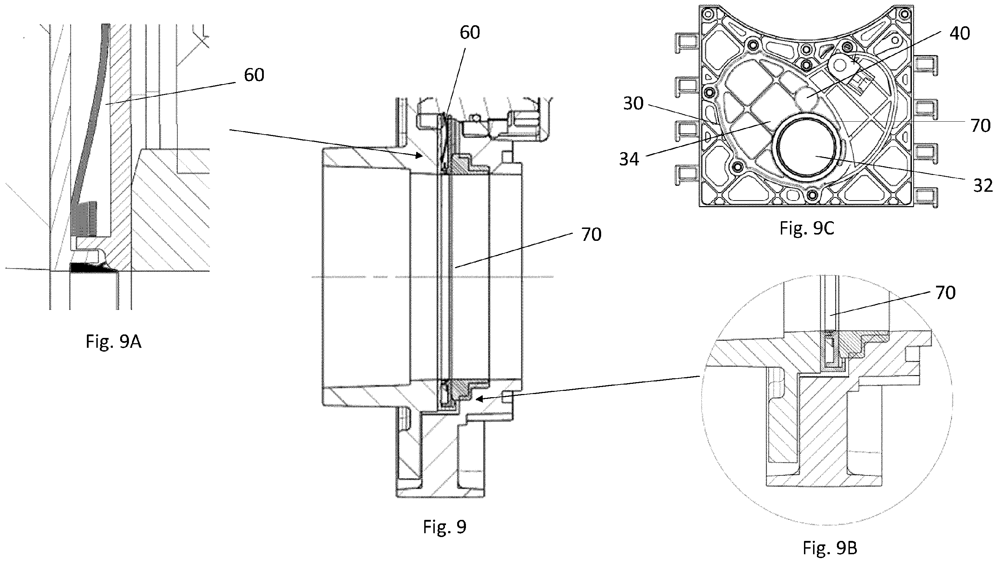

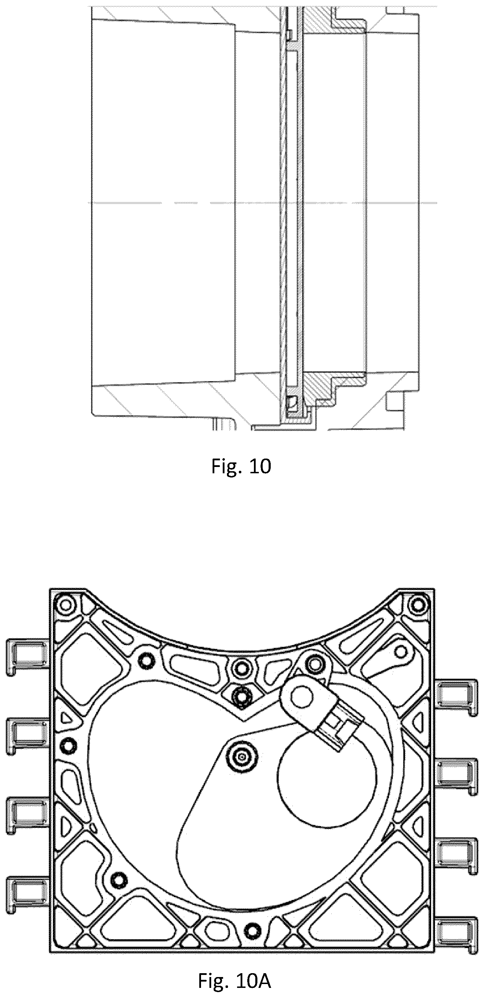

Operation of a flush valve plate 30 according to the disclosure will now be described with reference to the examples shown in Figs. 9 and 10. In the examples shown, the spring element is a wave spring 60" such as shown in Fig. 8. It should be noted, however, that the spring element may be any other envisaged spring element such as those shown in Figs 4 to 7.

Figures 9 and 9A to 9C illustrate the valve plate 30 in the open position, most clearly seen in Fig. 9C. In this position, the plate 30 is located such that the opening 32 (formed in both the inner and outer plates and extending through the plate) is aligned with the drain line and the waste line. The additional seal 70 is formed around the opening 32 - i.e. is located between the inner and outer plates 301, 302 around the opening 32.

The spring element 6" is located in the second plate portion i.e. between the solid area of the inner plate and the solid area of the outer plate providing an expansive force E on the inner and outer plates to create a sealing fit between the plate and the housing.

In the closed position as shown in Figs. 10 and 10A, the spring force of the spring element continues to push the inner and outer plates outwards (direction E) to retain the seal between the plate 30 and the housing.

This means that the seal and seal grooves of the existing designs are eliminated whilst retaining effective sealing, so avoiding the problem of debris collecting to prevent operation of the valve plate.

## Claims

1. A flush valve plate (30) having an opening (32) therethrough in a first plate portion and a solid plate area (34) in a second plate portion such that in a first position, the opening can be aligned with a port (20) of a flush valve to which the valve plate is, in use, mounted and in a second position, the solid plate area is moved into alignment with the port.

2. The flush valve plate according to claim 1, the plate further comprising a mounting portion having a pivot point (40) arranged to be pivotally mounted to a housing of the flush valve, in use.

3. The flush valve plate according to claim 1 or 2, wherein the plate (30) comprises an inner plate (301) and an outer plate (302) connected together with a space defined therebetween, each of the inner and the outer plate having a corresponding and aligned first plate portion and second plate portion

4. The flush valve plate according to claim 3, further comprising a spring element (60, 60', 60") located in the space between the inner plate and the outer plate.

5. The flush valve plate according to claim 5, wherein the spring element is located between the second plate portion of the inner plate and the second plate portion of the outer plate.

6. The flush valve plate according to claim 3, 4 or 5, further comprising a seal (70) located between the inner plate and the outer plate.

7. The flush valve plate according to claim 6, wherein the seal is located around the opening (32).

8. The flush valve plate according to any of claims 4 to 7, wherein the spring element comprises a springy material (60).

9. The flush valve plate according to claim 8, wherein the spring element comprises a sponge material having a spring structure.

10. The flush valve according to any of claims 4 to 7, wherein the spring element comprises one or more springs (60', 60").

11. The flush valve plate according to claim 10, wherein the one or more springs comprises one or more conical springs (60').

12. The flush valve plate according to claim 10 or 11, wherein the one or more springs comprises a wave spring (60").

13. The flush valve plate according to any preceding claim made by additive manufacturing.

14. A flush valve assembly comprising:
a valve housing (10) defining a port (20); and
a valve plate (30) as claimed in any preceding claim arranged to rotate in a plane, relative to the port, such as to vary a degree of coverage of the port by the valve plate depending on the rotational position of the plate.

15. A vacuum toilet system comprising a toilet bowl and a waste line via which waste from the toilet bowl is ejected, and a flush valve as claimed in claim 14, located between the toilet bowl and the waste line, such that the port provides fluid communication from the toilet bowl to the waste line.
